# EUROPÄISCHE PATENTSCHRIFT

(11) **EP 1 796 814 B1**
(45) Veröffentlichungstag und Bekanntmachung des Hinweises auf die Patenterteilung: **02.10.2013**
(21) Anmeldenummer: 05784641.2
(22) Anmeldetag: 24.08.2005
(51) Int. Cl.: B01D 46/52

(54) **KOMPAKTFILTER MIT 4-KANT-DICHTUNG**
COMPACT FILTER COMPRISING A SQUARE SEAL
FILTRE COMPACT A JOINT CARRE

(30) Priorität: 08.10.2004 DE 102004049403
(43) Veröffentlichungstag der Anmeldung: 20.06.2007
(73) Patentinhaber: MANN + HUMMEL GMBH, 71638 Ludwigsburg (DE)
(72) Erfinder: LAMPERT, Johannes, 82237 Wörthsee (DE); PELZ, Andreas, 70806 Kornwestheim (DE)
(74) Vertreter: Seyboth, Matthias
(86) Internationale Anmeldenummer: PCT/EP2005/054171
(87) Internationale Veröffentlichungsnummer: WO 2006/040214

(56) Entgegenhaltungen:
- EP-A- 1 216 737
- EP-A1- 0 334 719
- EP-A1- 1 208 902
- EP-A1- 1 306 117
- DE-A1- 19 821 360
- US-B1- 6 350 291

## Beschreibung

### Technisches Gebiet

Die Erfindung betrifft ein Filtersystem nach Anspruch 1 oder Anspruch 2

### Stand der Technik

In der Druckschrift US 6322602 B2 wird ein Luftfilter beschrieben, der in einem zylindrischen Filtergehäuse ein axial zu durchströmendes Filterelement aufweist. Der Aufnahmeraum zur Aufnahme des Filters im Filtergehäuse ist an einer axialen Stirnseite im Bereich der Anströmseite des Filters von einem Gehäusedeckel zu verschließen, welcher zum Austausch des Filterelements gelöst wird, woraufhin das Filterelement aus dem Aufnahmeraum axial herausgenommen und-durch ein neues Filterelement ersetzt werden kann.

Diese Ausführung weist den Nachteil auf, dass zum Austausch des Filterelements der Gehäusedeckel im Anströmbereich entfernt werden muss, was zunächst eine Demontage des gesamten Filtergehäuses aus seiner Einbauposition voraussetzt, weil der Gehäusedeckel mit den Zuleitungen für die Zufuhr der zu reinigenden Luft verbunden ist. Ein Austausch des Filterelements ist daher nur mit einem erheblichen Aufwand zu bewerkstelligen, wodurch die Wartungsdauer ansteigt und erhebliche Wartungskosten anfallen. Aus der US 6,350,291 B1 ist ein Filtersystem mit einem Wickelfilter bekannt, der mit einem umlaufenden Befestigungsring für eine daran befestigte Dichtung versehen ist.

Der Erfindung liegt das Problem zugrunde, ein Verpressen der Profildichtung mit einer zu hohen Besskraft zu verbindern.

Dieses Problem wird erfindungsgemäß mit den Merkmalen des Anspruch 1 oder Anspruch 2 gelöst.

### Offenbarung der Erfindung

Der wesentliche Vorteil der Erfindung liegt darin, dass das Filterelement mit einem Befestigungsring verbunden ist. Dieser kann an dem Filtermedium, das nach Art eines Wickelfilters aufgebaut ist, über eine Schweiß-, Klebe-, Extrusions- oder Schmelzverbindung befestigt sein. An diesem Befestigungsring ist eine umlaufende Profildichtung angeordnet, die über ein Gehäuse eine Abdichtung von Rohluftseite zu Reinluftseite bewirkt. Durch die Verwendung eines Befestigungsringes, der in relativ einfacher Weise an die Struktur des Filterelements anpassbar ist, kann die Gehäusestruktur normiert werden. So lassen sich beispielsweise in einem Gehäuse mit einem bestimmten Durchmesser, kleinere, längere oder kürzere Filterelemente einbauen. Außerdem lässt die Struktur des Befestigungsringes es zu, dass die Profildichtung sehr einfach gestaltet werden kann.

Gemäß einer vorteilhaften Ausgestaltung der Erfindung nach Anspruch 1 ist diese rechteckförmig gestaltet und stützt sich an einem umlaufenden Kragen im Form eines Wulstes des Befestigungsringes ab. Selbstverständlich besteht auch die Möglichkeit, die Profildichtung an den Befestigungsring anzukleben.

In einer weiteren Ausgestaltung wird vorgeschlagen, den Befestigungsring im Zweikomponentenspritzgießverfahren herzustellen und die Profildichtung als zweite Komponente anzuformen. In vorteilhafter Weise dichtet die Profildichtung axial oder radial, es besteht auch die Möglichkeit, eine Abdichtung radial und gleichzeitig axial zu erzielen.

Das Gehäuse für das Filtersystem besteht aus zwei Gehäuseteilen und ist im Befestigungsbereich des Filterelements teilbar.

Die Verbindung der Gehäuseteile erfolgt in vorteilhafter Weise mittels Rast- oder Spannverschlüssen. Selbstverständlich können diese Teile auch miteinander verschraubt sein.

### Kurze Beschreibung der Zeichnungen

Die Erfindung wird nachfolgend anhand eines Ausführungsbeispiels näher erläutert.

Es zeigt:

Figur 1 ein Filtersystem in einer Schnittdarstellung

Figur 2 ein Detail des in Figur 1 gezeigten Filtersystems, ebenfalls in einer Schnittdarstellung.

### Ausführungsform(en) der Erfindung

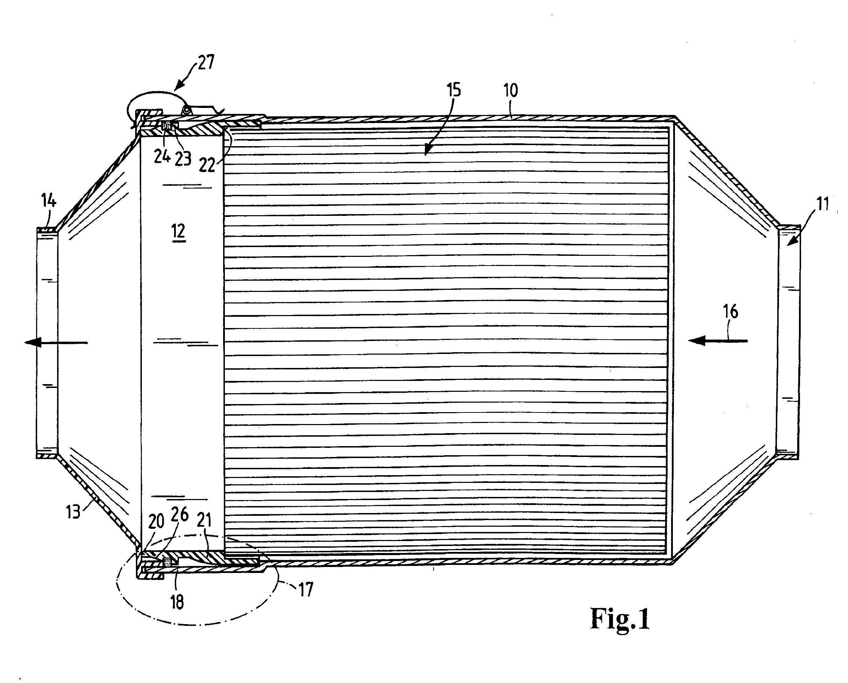

Das Filtersystem gemäß Figur 1 besteht aus einem Gehäuse 10, das im Wesentlichen konzentrisch, oval oder elliptisch gestaltet ist. Dieses Gehäuse 10 weist einen Rohlufteinlass 11 auf, der mit einem hier nicht dargestellten Rohluftansaugstutzen gekoppelt ist. Auf der Reinluftseite 12 ist ein Gehäusedeckel 13 vorgesehen, dieser ist ebenfalls mit einem Anschlussstutzen 14 versehen, an welchen eine Reinluftleitung angeschlossen werden kann. Innerhalb des Gehäuses 10 befindet sich ein Filterelement 15. Es handelt sich dabei um ein Element, das beispielsweise in der WO 2004-020075 beschrieben ist. Das Element wird gemäß Pfeil 16 durchströmt, die gereinigte Luft verlässt axial das Filterelement auf der Reinluftseite 12.

Im Verbindungsbereich 17, der sich über den gesamten Umfang des Filtersystems erstreckt, erfolgt sowohl die Befestigung des Filterelements 15 als auch die Verbindung zwischen Gehäuse 10 und Gehäusedeckel 13.

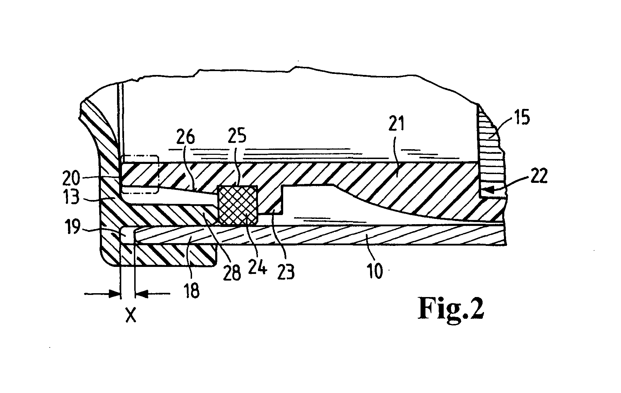

Dieser Verbindungsbereich ist in Figur 2 näher dargestellt. Gleiche Teile sind mit gleichen Bezugszeichen versehen. Das Gehäuse 10 greift mit seinem umlaufenden Rand 18 in eine umlaufende Nut 19 des Gehäusedeckels 13 ein. Dabei erstreckt sich der Rand 18 nicht bis zum Nutgrund, sondern lässt einen gewissen Toleranzabstand X. Der Gehäusedeckel 13 weist eine Anlagefläche 20 auf, diese ist ebenfalls umlaufend vorgesehen und dient zur Abstützung eines Befestigungsringes 21.

Der Befestigungsring 21 dient zur Aufnahme des Filterelements 15. Er besitzt an der dem Filterelement zugeordneten Seite einen Absatz 22, in welchen das Filterelement eingeklebt oder eingeschweißt ist. Durch diesen Absatz wird die filterwirksame Fläche des Filterelements nur geringfügig beeinflusst. Der Befestigungsring 21 ist ferner mit einem umlaufenden Wulst 23 versehen. An diesem Wulst stützt sich eine Profildichtung 24 ab. Diese ist im Wesentlichen rechteckförmig ausgebildet und in einer Nut 25 des Befestigungsrings 21 fixiert. Zur einfachen Montage der Profildichtung 24 an dem Befestigungsring 21 ist eine Einführschräge 26 vorgesehen, über welche die Profildichtung 24 aufgeschoben werden kann.

Der Befestigungsring 21 stützt sich, wie bereits erwähnt, an seiner, dem Filterelement 15 gegenüberliegenden, Stirnfläche an der Anlagefläche 20 ab. Durch diese Kontaktierung zwischen Befestigungsring 21 und Gehäusedeckel 13 wird vermieden, dass die Profildichtung 24 beim Verbinden von Gehäusedeckel 13 und Gehäuse 10 mit einer zu hohen Presskraft verformt wird. Die Verbindung der beiden Teile erfolgt über Spannverschlüsse 27, die am Umfang des Gehäuses 10 angeordnet sind (siehe Figur 1).

Es besteht auch die Möglichkeit, eine Dichtung im Bereich der Anlagefläche 20 an dem Befestigungsring 21 anzuordnen. In diesem Fall erfolgt eine Kontaktierung zwischen Gehäusedeckel 13 und Befestigungsring 21 im Bereich des Wulstes 23, in Verbindung mit der Nutflanke 28. Die Profildichtung 24 dichtet sowohl axial als auch radial ab. Selbstverständlich besteht die Möglichkeit, die Dichtung derart zu gestalten, dass sie lediglich eine axiale Abdichtung bewirkt.

## Patentansprüche

1. Filtersystem mit einem Filterelement (15), insbesondere zur Filtrierung der Ansaugluft einer Brennkraftmaschine, bestehend aus einem Wickelfilter, wobei der Wickelfilter axial durchströmt ist und am Umfang einen Befestigungsring (21) aufweist, wobei dieser Befestigungsring (21) mit dem Wickelfilter über eine Schweiß-, Klebe-, Extrusions- oder Schmelzverbindung verbunden ist, wobei der Befestigungsring (21) mit einer umlaufenden Profildichtung (24) versehen ist, die in Verbindung mit einer Gehäuse-Anordnung aus Gehäuse (10) und Gehäusedeckel (13) eine Abdichtung von der Rohluftseite zur Reinluftseite bewirkt, wobei das Gehäuse (10) mit seinem umlaufenden Rand (18) in eine umlaufende Nut (19) des Gehäusedeckels (13) eingreift, wobei der Gehäusedeckel (13) eine umlaufende Anlagefläche (20) aufweist wobei der Befestigungsring (21) einen umlaufenden Wulst (23) aufweist, wobei die Profildichtung (24) an dem Wulst (23) des Befestigungsrings (21) abgestützt ist, wobei der Befestigungsring (21) sich an seiner dem Wickelfilter gegenüberliegenden Stirnfläche an der Anlagefläche (20) des Gehäusedeckels (13) abstützt, und wobei durch diese Kontaktierung zwischen Befestigungsring (21) und Gehäusedeckel (13) vermieden werden kann, dass die Profildichtung (24) beim Verbinden von Gehäusedeckel (13) und Gehäuse (10) mit einer zu hohen Presskraft zwischen der inneren Nutflanke (28) der Nut (19) des Gehäusedeckels (13) und dem Wulst (23) des Befestigungsrings (21) verformt werden kann.

2. Filtersystem mit einem Filterelement (15), insbesondere zur Filtrierung der Ansaugluft einer Brennkraftmaschine, bestehend aus einem Wickelfilter, wobei der Wickelfilter axial durchströmt ist und am Umfang einen Befestigungsring (21) aufweist, wobei dieser Befestigungsring (21) mit dem Wickelfilter über eine Schweiß-, Klebe-, Extrusions- oder Schmelzverbindung verbunden ist, wobei der Befestigungsring (21) mit einer umlaufenden Profildichtung (24) versehen ist, die in Verbindung mit einer Gehäuse-Anordnung aus Gehäuse (10) und Gehäusedeckel (13) eine Abdichtung von der Rohluftseite zur Reinluftseite bewirkt, wobei das Gehäuse (10) mit seinem umlaufenden Rand (18) in eine umlaufende Nut (19) des Gehäusedeckels (13) eingreift, wobei der Gehäusedeckel (13) eine umlaufende Anlagefläche (20) aufweist wobei der Befestigungsring (21) einen umlaufenden Wulst (23) aufweist, wobei die Profildichtung (24) an dem Befestigungsring (21) im Bereich der Anlagefläche (20) des Gehäusedeckels (13) angeordnet ist, wobei der Befestigungsring (21) mit seinem Wulst (23) die innere Nutflanke (28) der Nut (19) des Gehäusedeckels (13) kontaktiert, und wobei durch diese Kontaktierung zwischen Befestigungsring (21) und Gehäusedeckel (13) vermieden werden kann, dass die Profildichtung (24) beim Verbinden von Gehäusedeckel (13) und Gehäuse (10) mit einer zu hohen Presskraft zwischen der Anlagefläche (20) des Gehäusedeckels (13) und der Stirnfläche des Befestigungsrings (21) verformt werden kann.

3. Filtersystem nach Anspruch 1, **dadurch gekennzeichnet, dass** die Profildichtung (24) näherungsweise rechteckförmig ausgestaltet ist und sich an einem umlaufenden Kragen im Form des Wulstes (23) des Befestigungsrings (21) abstützt.

4. Filtersystem nach einenem der vorherigen Ansprüche, **dadurch gekennzeichnet, dass** die Profildichtung (24) im Zweikomponentenspritzgießverfahren mit dem Befestigungsring (21) hergestellt ist.

5. Filtersystem nach einenem der vorherigen Ansprüche, **dadurch gekennzeichnet, dass** die Dichtung eine axiale und / oder radiale Abdichtung bewirkt.

6. Filtersystem nach einenem der vorherigen Ansprüche, **dadurch gekennzeichnet, dass** die Verbindung der Gehäuseteile in formales Gehäuses (10) und des Gehäusedeckels (13) mittels Rast- oder Spannverschlüssen erfolgt.

7. Filtersystem nach einenem der vorherigen Ansprüche, **dadurch gekennzeichnet, dass** die Gehäuse-Anordnung reinluftseitig mit einem Anschlussstutzen versehen ist zum Befestigen eines Reinluftrohres, wobei der Übergang zwischen Filterelement und Anschlussstutzen im Wesentlichen kegelförmig gestaltet ist.

## Claims

1. Filter system with a filter element (15), in particular for filtering the intake air of an internal combustion engine, consisting of a wound filter, the wound filter being axially flowed through and featuring a mounting ring (21) at the circumference, this mounting ring (21) being connected with the wound filter by means of a welded, glued, extrusion or hot melt connection, the mounting ring (21) being provided with a circumferential profile gasket (24), which ensures a sealing between the raw air side and the clean air side in conjunction with a housing assembly of housing (10) and housing cover (13), the housing (10) engaging with its circumferential edge (18) into a circumferential groove (19) of the housing cover (13), the housing cover (13) featuring a circumferential contact area (20), the mounting ring (21) featuring a circumferential bead (23), the profile gasket (24) being supported by the bead (23) of the mounting ring (21), the mounting ring (21) being supported, with its end face opposing the wound filter, by the contact area (20) of the housing cover (13), and this contact between mounting ring (21) and housing cover (13) avoiding that the profile gasket (24) can be deformed when connecting the housing cover (13) and housing (10) with an excessive pressing force between the inner groove flank (28) of the groove (19) of the housing cover (13) and the bead (23) of the mounting ring (21).

2. Filter system with a filter element (15), in particular for filtering the intake air of an internal combustion engine, consisting of a wound filter, the wound filter being axially flowed through and featuring a mounting ring (21) at the circumference, this mounting ring (21) being connected with the wound filter by means of a welded, glued, extrusion or hot melt connection, the mounting ring (21) being provided with a circumferential profile gasket (24), which ensures a sealing between the raw air side and the clean air side in conjunction with a housing assembly of housing (10) and housing cover (13), the housing (10) engaging with its circumferential edge (18) into a circumferential groove (19) of the housing cover (13), the housing cover (13) featuring a circumferential contact area (20), the mounting ring (21) featuring a circumferential bead (23), the profile gasket (24) being disposed on the mounting ring (21) in the area of the contact area (20) of the housing cover (13), the mounting ring (21) contacting with its bead (23) the inner groove flank (28) of the groove (19) of the housing cover (13), and this contact between mounting ring (21) and housing cover (13) avoiding that the profile gasket (24) can be deformed when connecting the housing cover (13) and housing (10) with an excessive pressing force between the contact area (20) of the housing cover (13) and the end face of the mounting ring (21).

3. Filter system according to claim 1, **characterized in that** the profile gasket (24) has an approximately rectangular design and is supported by a circumferential collar in the shape of the bead (23) of the mounting ring (21).

4. Filter system according to one of the above claims, **characterized in that** the profile gasket (24) is manufactured in the two-component injection molding technology with the mounting ring (21).

5. Filter system according to one of the above claims, **characterized in that** the gasket ensures an axial and / or radial sealing.

6. Filter system according to one of the above claims, **characterized in that** the connection of the housing components in the form of the housing (10) and the housing cover (13) is realized by means of snap-in or tension locks.

7. Filter system according to one of the above claims, **characterized in that** the housing assembly is provided with a connecting piece on the clean air side for attaching a clean air pipe, the transition between filter element and connecting piece having substantially a conical design.

## Revendications

1. Système de filtre avec un élément filtrant (15), notamment destiné au filtrage de l'air d'aspiration d'un moteur à combustion interne, comprenant un filtre enroulé, le filtre enroulé étant parcouru en sens axial et présentant sur la circonférence une bague de fixation (21), cette bague de fixation (21) étant reliée au filtre enroulé par une liaison soudée, collée, extrudée ou fondue, la bague de fixation (21) étant pourvue d'un joint profilé (24) circulaire qui assure l'étanchéité entre le côté air brut et le côté air pur en combinaison avec un ensemble constitué du boîtier (10) et du couvercle de boîtier (13), le bord circulaire (18) du boîtier (10) étant en prise dans une rainure (19) circulaire du couvercle de boîtier (13), le couvercle de boîtier (13) présentant une surface de contact (20) circulaire, la bague de fixation (21) étant pourvue d'un bourrelet (23) circulaire, le joint profilé (24) s'appuyant sur le bourrelet (23) de la bague de fixation (21), la bague de fixation (21) s'appuyant, avec sa face frontale opposée au filtre enroulé, sur la surface de contact (20) du couvercle de boîtier (13), et ce contact entre la bague de fixation (21) et le couvercle de boîtier (13) permettant d'empêcher que le joint profilé (24) ne se déforme en cas d'assemblage du couvercle de boîtier (13) et du boîtier (10) avec une force de pression excessive entre le flanc intérieur (28) de la rainure (19) du couvercle de boîtier (13) et le bourrelet (23) de la bague de fixation (21).

2. Système de filtre avec un élément filtrant (15), notamment destiné au filtrage de l'air d'aspiration d'un moteur à combustion interne, comprenant un filtre enroulé, le filtre enroulé étant parcouru en sens axial et présentant sur la circonférence une bague de fixation (21), cette bague de fixation (21) étant reliée au filtre enroulé par une liaison soudée, collée, extrudée ou fondue, la bague de fixation (21) étant pourvue d'un joint profilé (24) circulaire qui assure l'étanchéité entre le côté air brut et le côté air pur en combinaison avec un ensemble constitué du boîtier (10) et du couvercle de boîtier (13), le bord circulaire (18) du boîtier (10) étant en prise dans une rainure (19) circulaire du couvercle de boîtier (13), le couvercle de boîtier (13) présentant une surface de contact (20) circulaire, la bague de fixation (21) étant pourvue d'un bourrelet (23) circulaire, le joint profilé (24) étant disposé sur la bague de fixation (21) à proximité de la surface de contact (20) du couvercle de boîtier (13), la bague de fixation (21) touchant, avec son bourrelet (23), le flanc intérieur (28) de la rainure (19) du couvercle de boîtier (13) et ce contact entre la bague de fixation (21) et le couvercle de boîtier (13) permettant d'empêcher que le joint profilé (24) ne se déforme en cas d'assemblage du couvercle de boîtier (13) et du boîtier (10) avec une force de pression excessive entre la surface de contact (20) du couvercle de boîtier (13) et la face frontale de la bague de fixation (21).

3. Système de filtre selon la revendication 1, **caractérisé en ce que** le joint profilé (24) est réalisé de manière quasiment rectangulaire et s'appuie sur un collet circulaire avec la forme du bourrelet (23) de la bague de fixation (21).

4. Système de filtre selon l'une des revendications précédentes, **caractérisé en ce que** le joint profilé (24) est fabriqué selon un procédé de moulage par injection à deux composants avec la bague de fixation (21).

5. Système de filtre selon l'une des revendications précédentes, **caractérisé en ce que** le joint assure une étanchéité axiale et/ou radiale.

6. Système de filtre selon l'une des revendications précédentes, **caractérisé en ce que** la liaison entre les parties de boîtier sous forme de boîtier (10) et de couvercle de boîtier (13) est effectuée au moyen de fermetures à cran ou à genouillère.

7. Système de filtre selon l'une des revendications précédentes, **caractérisé en ce que** l'ensemble du boîtier est pourvu, du côté air pur, d'une tubulure de raccord servant à fixer un tube d'air pur, la transition entre l'élément filtrant et la tubulure de raccord étant essentiellement exécutée en forme de cône.
